# EUROPEAN PATENT SPECIFICATION

(11) **EP 1 965 579 B1**
(45) Date of publication and mention of the grant of the patent: **19.03.2014**
(21) Application number: 07122934.8
(22) Date of filing: 11.12.2007
(51) Int. Cl.: H04M 7/06, H04Q 3/00, H04Q 3/66

(54) **Bearer-Independent Call Control Call Mediation Node performing route reselection on outgoing route failure**
Bearer-Independent Call Control Call Mediation Node welcher im Fehlerfall einer ausgehenden Wegewahl eine erneute Wegewahl durchführt
Bearer-Independent Call Control Call Mediation Node effectuer en cas d'échec de la route sortante une nouvelle sélection de la route

(30) Priority: 28.02.2007 CN 200710084291
(43) Date of publication of application: 03.09.2008
(73) Proprietor: Huawei Technologies Co., Ltd., Longgang District, Shenzhen Guangdong 518129 (CN)
(72) Inventor: Xu, Xudong, Shenzhen 518129, Guangdong (CN); Zhu, Haopeng, Shenzhen 518129, Guangdong (CN)
(74) Representative: Thun, Clemens

(56) References cited:
- EP-A- 1 311 101
- US-A- 5 642 396
- SANDESARA M DOLLY J A OUDMAIJER D LEBOVITS N: "PROPOSAL FOR BICC/ISUP PROTOCOL TO SUPPORT AUTOMATIC RE-ROUTING (CRANKBACK)" ITU-T DRAFT STUDY PERIOD 2001-2004, INTERNATIONAL TELECOMMUNICATION UNION, GENEVA, CH, vol. STUDY GROUP 11, 14 May 2001 (2001-05-14), pages 1-5, XP017415470
- "Traffic routing; E.170 (10/92)" ITU-T STANDARD IN FORCE (I), INTERNATIONAL TELECOMMUNICATION UNION, GENEVA, CH, no. E.170 (10/92), 30 October 1992 (1992-10-30), XP017400279
- "Universal Mobile Telecommunications System (UMTS); Bearer-independent circuit-switched core network; Stage 2 (3GPP TS 23.205 version 6.7.0 Release 6); ETSI TS 123 205" ETSI STANDARDS, LIS, vol. 3-CN4, no. V6.7.0, 1 December 2006 (2006-12-01), XP014039879 ISSN: 0000-0001
- "Bearer Independent Call Control protocol (Capability Set 2): Generic signalling procedures for the support of the ISDN user part supplementary services and for bearer redirection; Q.1902.6 (07/01)" ITU-T STANDARD IN FORCE (I), INTERNATIONAL TELECOMMUNICATION UNION, GENEVA, CH, no. Q.1902.6 (07/01), 1 July 2001 (2001-07-01), XP017402640

## Description

### Field of the Invention

The present invention relates to Bearer Independent Call Control (BICC) technologies, and particularly, to a method, an exchange and a system for reselecting a route in a BICC Call Mediation Node (CMN).

### Background of the Invention

The Bearer Independent Call Control (BICC) protocol is a call control protocol independent of bearer specified by the International Telecommunications Union - Technical Specification Group 11 (ITU-TSG11). The BICC protocol mainly solves the problem of separating call control from bearer control so that call control signalings may be carried in various networks such as a Message Transfer Part (MTP), a Signaling System number 7 (SS7) network, an Asynchronous Transfer Mode (ATM) network and an Internet Protocol (IP) network.

The BICC protocol is evolved from the Integrated Services Digital Network (ISDN) User Part (ISUP) and is an important support for the evolving from a traditional telecom network to an integrated multi-service network. Nodes supporting BICC signalings include a Serving Node (SN) and a Call Mediation Node (CMN) in the BICC protocol. The SN has a Bear Control Function (BCF), and the CMN does not have the BCF. For the SN, the call function and the BCF may be configured in different entities or in one entity physically. If the call function and BCF are configured in different entities, Call Bear Control (CBC) signalings need to be used to send a message between the call function entity and the BCF entity. The BICC solves the problem of separating call control from bearer control. The ATM has a better Quality of Service (QoS) guarantee and call processing capability, and the BICC is able to support the ATM network bearer better, which is one of the reasons that the industry is optimistic about the BICC.

In the prior art, a local exchange controls the bearer, BICC signalings are used between exchanges. If the selection of an outgoing route fails, another outgoing route is reselected.

However, if the local exchange serves as a BICC CMN in this call, a route reselecting mechanism of the prior art may result in that there is control bearer in the outgoing call and there is no control bearer in the ingoing call, which is inconsistent with the call establishing model described by the BICC, so that it is impossible to establish the call.

### Summary of the Invention

Embodiments of the present invention provide a method for reselecting a route in a BICC CMN, which may reselect a new outgoing route after an outgoing route fails in the case that the local exchange serves as a CMN, so as to establish a call successfully.

Embodiments of the present invention further provide a system for reselecting a route in a BICC CMN, which may reselect a new outgoing route after an outgoing route fails in the case that the local exchange serves as a CMN, so as to establish a call successfully.

Embodiments of the present invention further provide an exchange serving as a BICC CMN in this call, which may reselect a new outgoing route after an outgoing route fails in the case that the local exchange serves as a CMN, so as to establish a call successfully.

A method for reselecting a route in a Bearer Independent Call Control Protocol (BICC) Call Mediation Node (CMN) includes configuring a corresponding relation between an outgoing route failure cause value and a designated route on an exchange serving as the BICC CMN, the method further includes:
acquiring, by the exchange serving as the BICC CMN, an outgoing route failure cause value when an outgoing route fails; and
selecting a designated route according to the corresponding relation between the outgoing route failure cause value and the designated route and setting up a call;
wherein the outgoing route fails before a bearer between a preceding exchange and a succeeding exchange is established;
wherein the exchange originally serves in the call as a Bearer Independent Call Control Protocol, BICC, Call Mediation Node, CMN, and ceases serving as the BICC CMN after selecting the designated route and sets up the call;
and wherein the call is a Bearer Independent Call Control - Bearer Independent Call Control, BICC-BICC, interworking, the exchange having ceased serving as the BICC CMN negotiates the bearer information with the preceding exchange, a media gateway and the succeeding exchange respectively.

A system for reselecting a route includes:
an exchange adapted to acquire an outgoing route failure cause value when an outgoing route fails, adapted to select a designated route according to a predefined corresponding relation between the outgoing route failure cause value and the designated route and adapted to set up a call;
a media gateway, adapted to establish the call with the exchange;
wherein the outgoing route fails before a bearer between a preceding exchange and a succeeding exchange is established;
wherein the exchange originally serves in the call as a Bearer Independent Call Control Protocol, BICC, Call Mediation Node, CMN, and is adapted to cease serving as the BICC CMN after selecting the designated route and to set up the call;
and wherein the call is a Bearer Independent Call Control - Bearer Independent Call Control, BICC-BICC, interworking, the exchange having ceased serving as the BICC CMN being further adapted to negotiate the bearer information with the preceding exchange, the media gateway and the succeeding exchange respectively.

An exchange comprising:
a call processing unit, adapted to acquire an outgoing route failure cause value when an outgoing route fails;
a route selecting unit, adapted to select a designated route according to a predefined corresponding relation between the outgoing route failure cause value and the designated route and adapted to set up a call;
wherein the exchange is adapted to originally serve in the call as a Bearer Independent Call Control Protocol, BICC, Call Mediation Node, CMN, to cease serving as the BICC CMN after selecting the designated route and to set up the call;
and wherein the call is a Bearer Independent Call Control - Bearer Independent Call Control, BICC-BICC, interworking, the exchange having ceased serving as the BICC CMN being further adapted to negotiate the bearer information with the preceding exchange, a media gateway and the succeeding exchange respectively.

As can be seen from the above technical solution, embodiments of the present invention provide a method for reselecting a route in a BICC CMN. As can be seen from the present invention, the local exchange is able to reselect an outgoing route for a designated failure cause value according to the failure processing data configuration, so as to improve the call completion rate.

### Brief Description of the Drawings

Figure 1 is an exemplary flowchart illustrating a method for reselecting a route in a BICC CMN in accordance with an embodiment of the present invention.
Figure 2 is a schematic diagram illustrating the exemplary structure of a system for reselecting a route in a BICC CMN in accordance with an embodiment of the present invention.
Figure 3 is a schematic diagram for reselecting a route in a BICC CMN in accordance with a first example.
Figure 4 is a flowchart illustrating a method for reselecting a route in a BICC CMN in accordance with a first example.
Figure 5 is a schematic diagram for reselecting a route in a BICC CMN in accordance with a second example and corresponding to the present invention.
Figure 6 is a flowchart illustrating a method for reselecting a route in a BICC CMN in accordance with a second example and corresponding to the present invention.
Figure 7 is a schematic diagram for reselecting a route in a BICC CMN in accordance with a third example.
Figure 8 is a flowchart illustrating a method for reselecting a route in a BICC CMN in accordance with a third example.
Figure 9 is a schematic diagram for reselecting a route in a BICC CMN in accordance with a fourth example.
Figure 10 is a flowchart illustrating a method for reselecting a route in a BICC CMN in accordance with a fourth example.
Figure 11 is a schematic diagram for reselecting a route in a BICC CMN in accordance with a fifth example.
Figure 12 is a flowchart illustrating a method for reselecting a route in a BICC CMN in accordance with a fifth example.
Figure 13 is a schematic diagram for reselecting a route in a BICC CMN in accordance with a sixth example.
Figure 14 is a flowchart illustrating a method for reselecting a route in a BICC CMN in accordance with a sixth example.
Figure 15 is a schematic diagram illustrating the exemplary structure of an exchange in accordance with an embodiment of the present invention.

### Detailed Description of the Invention

In order to make the object, technical solution and merits of the present invention clearer, a detailed description of the present invention is hereinafter given with reference to the accompanying drawings, embodiments and examples.

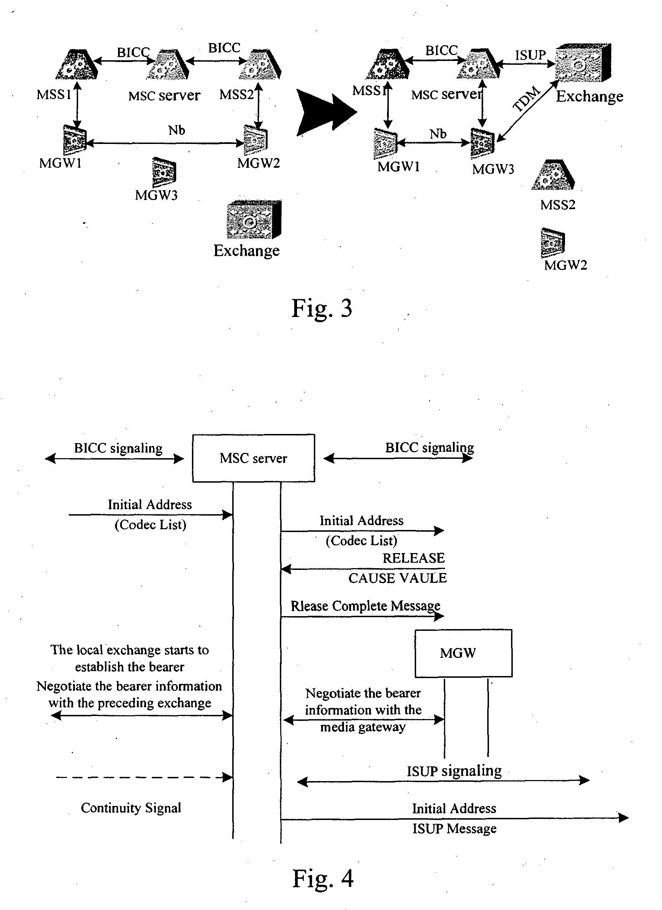

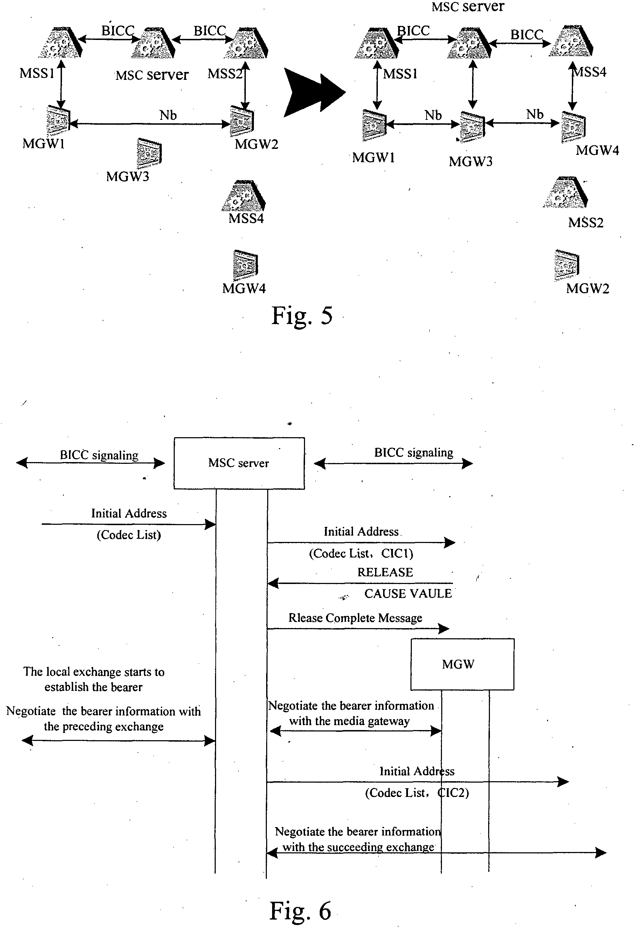

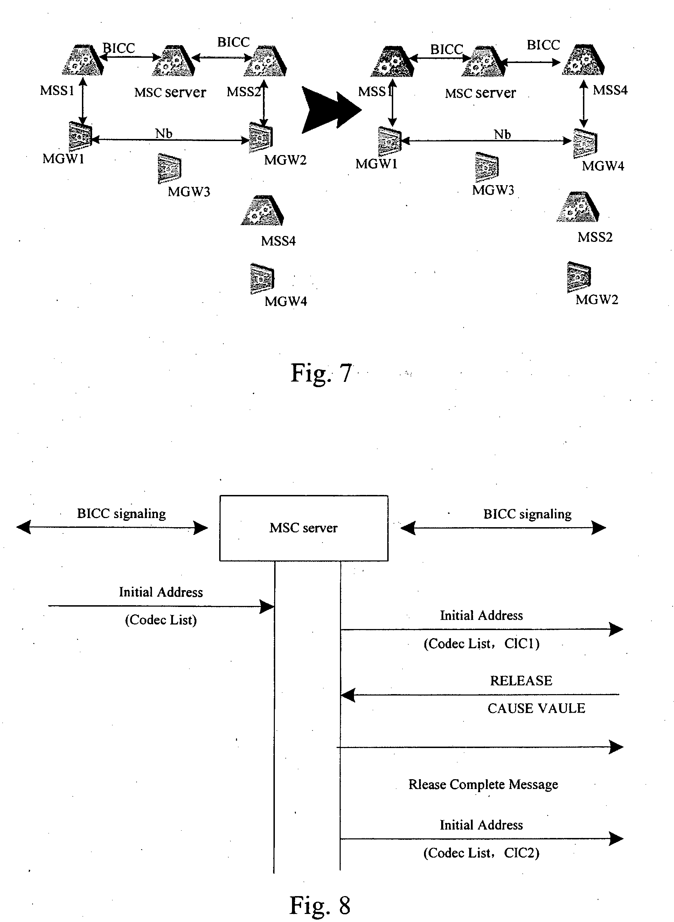

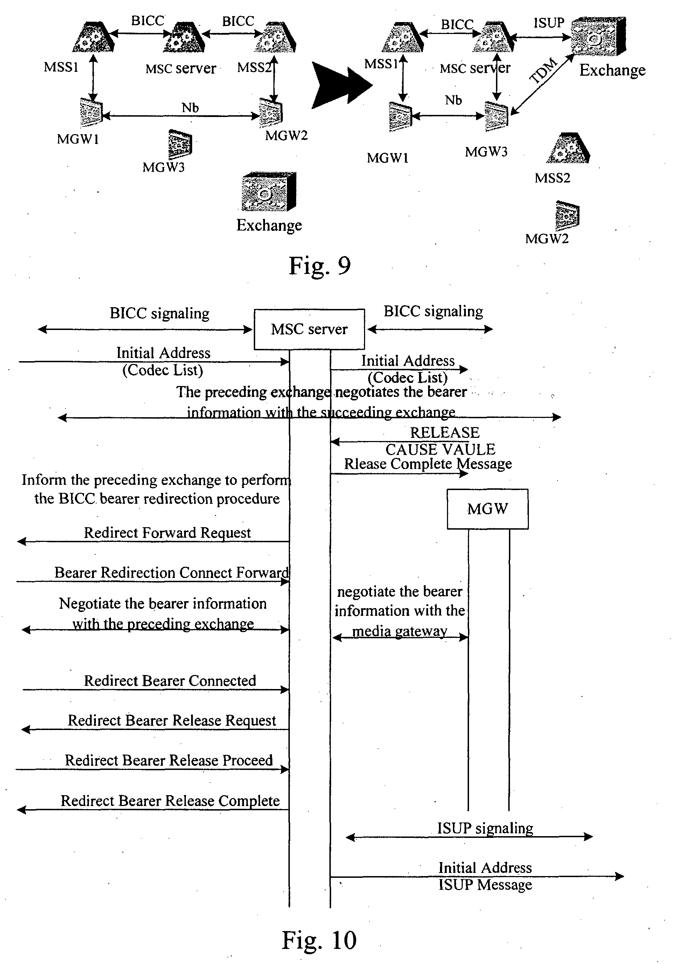

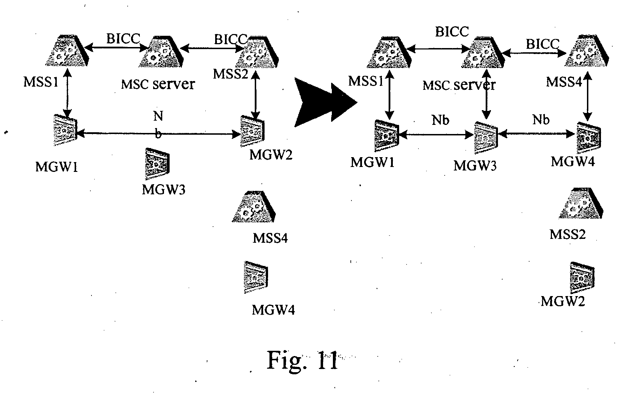

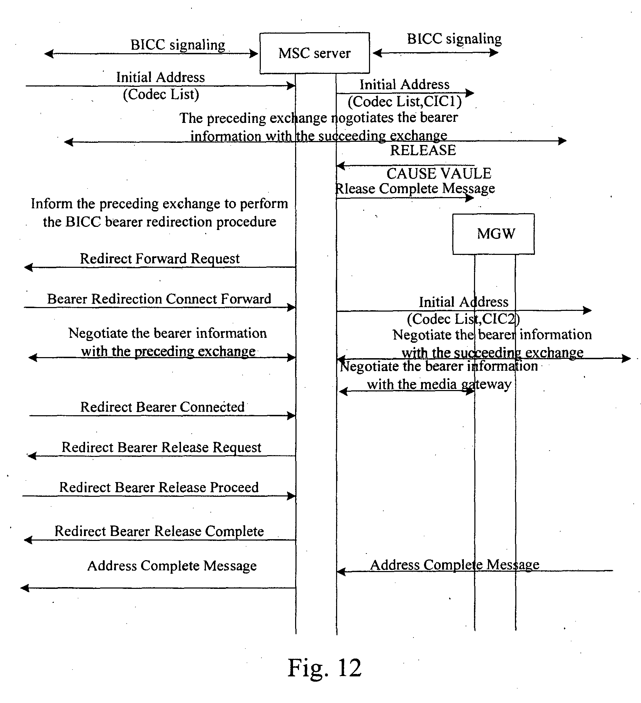

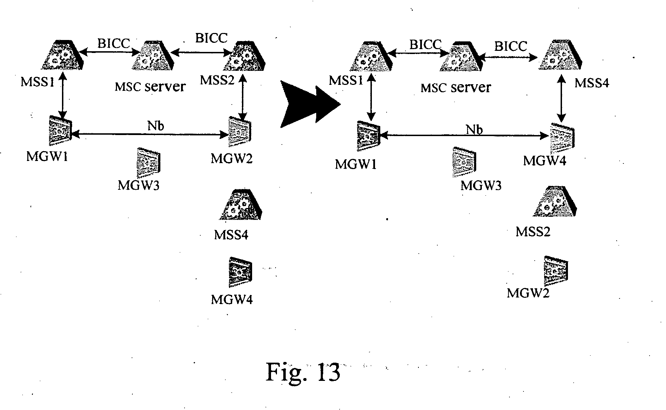

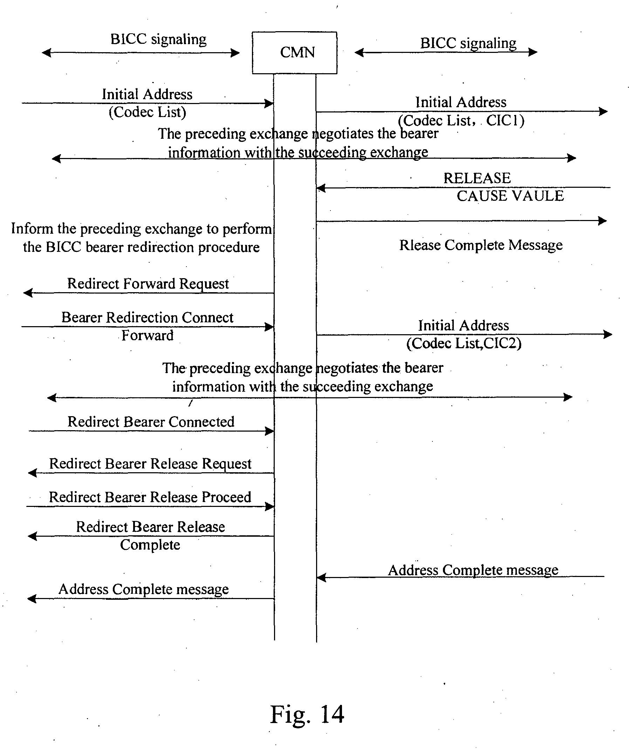

It should be mentioned that the second example (fig. 5 and 6) shows the claimed invention. The first example (fig. 3 and 4), third example (fig. 7 and 8), fourth example (fig. 9 and 10), fifth example (fig. 11 and 12) and sixth example (fig. 13 and 14) do not show the claimed invention. However, these example are used here for a better understanding of the invention.

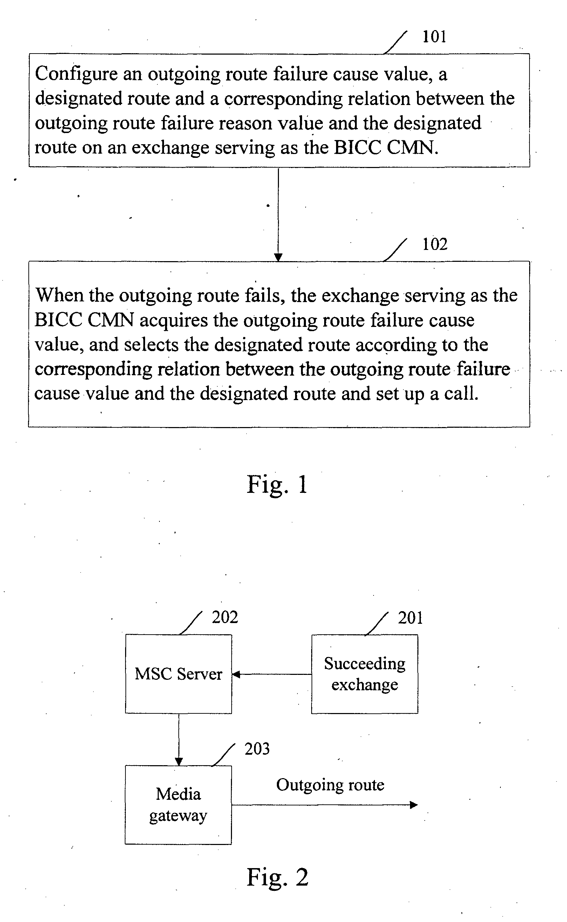

Figure 1 shows an exemplary flowchart illustrating a method for reselecting a route in a BICC CMN in accordance with an embodiment of the present invention. As shown in Figure 1, a local exchange serves as a BICC CMN, and the method is as follows.

Block 101: Set an outgoing route failure cause value, a designated route and a corresponding relation between the outgoing route failure cause value and the designated route on the exchange serving as the BICC CMN.

Block 102: When an outgoing route fails, the exchange serving as the BICC CMN acquires the outgoing route failure cause value, selects the designated route according to the corresponding relation between the outgoing route failure cause value and the designated route and sets up the call.

The local exchange may provide the outgoing route failure cause value when the outgoing route of the local exchange serving as the BICC CMN fails. Alternatively, a succeeding exchange provides the local exchange with a release message containing the outgoing route failure cause value when the process of the succeeding exchange selecting the outgoing route fails, and then the local exchange acquires the outgoing route failure cause value from the release message.

In Block 102, after selecting the designated route and setting up the call or after a codec negotiation, the local exchange may serve as the BICC CMN or may cease serving as the BICC CMN, and the route reselection in the BICC CMN may be triggered before or after the call bearer is established.

After the designated route is selected and the call is set up, if the call is Bearer Independent Call Control - Time Division Multiplex (BICC-TDM) interworking, i.e., the ingoing call uses BICC signalings and the ATM or IP bearer, and the outgoing call uses the TDM bearer, the method may further include: the local exchange negotiates bearer information with a preceding exchange to support the Transcoder Free Operation (TrFO) procedure between the local exchange and the preceding exchange.

Alternatively, the local exchange ceases serving as the BICC CMN after selecting the designated route and sets up the call, the outgoing route fails before the call set-up procedure is established, BICC signalings are used between exchanges, and the call is the BICC-BICC interworking after the designated route is selected and the call is set up. The BICC-BICC interworking means that the ingoing call uses BICC signalings and the ATM or IP bearer, and the outgoing call uses BICC signalings. In this case, the method further includes: the local exchange negotiates the bearer information with the preceding exchange and the succeeding exchange respectively to support the TrFO procedure between the local exchange and the preceding exchange and between the local exchange and the succeeding exchange.

If the outgoing route fails before the call set-up procedure is established and after the designated route is selected and the call is set up, BICC signalings are used between exchanges, and the local exchange still serves as the BICC CMN, the method further includes: the local exchange forwards bearer information in an outgoing message, and the bearer information is sent by the preceding exchange in the original call.

In addition, if the local exchange ceases serving as the BICC CMN after the designated route is selected and the call is set up or after the codec negotiation, the outgoing route fails after the call set-up procedure is established, BICC signalings are used between exchanges, and the call is the BICC-TDM interworking after the designated route is selected and the call is set up, the method further includes: the local exchange informs the preceding exchange to reestablish a bearer between the local exchange and the preceding exchange using a bearer redirection procedure, and negotiates the bearer information with the preceding exchange to support the TrFO procedure between the local exchange and the preceding exchange.

If the local exchange ceases serving as the BICC CMN after the designated route is selected and the call is set up or after the codec negotiation, the outgoing route fails after the call set-up procedure is established, BICC signalings are sued between exchanges, and the call is the BICC-BICC interworking after the designated route is selected and the call is set up, the method further includes: the local exchange informs the preceding exchange to reestablish a bearer between the local exchange and the preceding exchange using the bearer redirection procedure, and negotiates the bearer information with the preceding exchange and the succeeding exchange respectively to support the TrFO procedure between the local exchange and the preceding exchange and between the local exchange and the succeeding exchange.

If the outgoing route fails after the call set-up procedure is established, BICC signalings are used between exchanges, and the local exchange serves as the BICC CMN after the designated route is selected and the call set up or after the codec negotiation, the method further includes: the local exchange informs the preceding exchange to reestablish a bearer between the local exchange and the preceding exchange using the bearer redirection procedure, and forwards bearer information in the outgoing message, and the bearer information is sent by the preceding exchange in the original call.

Figure 2 shows a schematic diagram illustrating the exemplary structure of a system for reselecting a route in the BICC CMN in accordance with an embodiment of the present invention.

As shown in Figure 2, the system includes:
succeeding exchange 201, used for providing MSC Server (MSS) 202 serving as the BICC CMN with a release message containing an outgoing route failure cause value when the selection of an outgoing route fails;

MSC Server 202 serving as the BICC CMN, used for acquiring the outgoing route failure cause value from the release message, and controlling media gateway 203 according to a predefined corresponding relation between the outgoing route failure cause value and the designated route to select the designated route and set up the call;
media gateway 203, used for accepting the control of MSC Server 202 serving as the BICC CMN, and selecting the designated route and setting up the call.

Succeeding exchange 201 may be a Redirecting-from node and MSC Server 202 serving as the BICC CMN may be a Call Control - Anchor (CC-Anchor) node. In addition, the system may further include a Bearer Control - Anchor (BC-Anchor) node serving as a preceding exchange. Besides, succeeding exchange 201 and MSC Server 202 may be configured in one node and succeeding exchange 201 and a destination exchange in the designated route may be configured in one node.

In accordance with the present invention, the local exchange serves as the BICC CMN. If the process of the local exchange or the succeeding exchanges selecting the outgoing route fails, a new outgoing route may be reselected for the designated failure cause value according to the failure processing data configuration in the BICC CMN, so as to improve the call completion rate.

After the new outgoing route is reselected, the local exchange may still serve as the BICC CMN or may cease serving as the BICC CMN. Likewise, if the local exchange serves as the BICC CMN, the local exchange may trigger the route reselection before or after the original call bearer is established.

If the local exchange serves as the BICC CMN and triggers the route reselection before the original call bearer is established, and the local exchange configures data for performing the route reselection according to the designated failure cause value, the local exchange performs the route reselection procedure in the BICC CMN when the process of the local exchange selecting the outgoing route fails, or when the local exchange receives the release message of the succeeding exchanges containing the designated failure cause value before the bearer of the succeeding exchange is established or before the codec negotiation.

Figure 3 shows a schematic diagram for reselecting a route in the BICC CMN in accordance with a first example. Figure 4 shows a flowchart illustrating a method for reselecting a route in the BICC CMN in accordance with the first example.

In the first example, the local exchange serves as the BICC CMN and triggers the route reselection before the original call bearer is established; and the local exchange ceases serving as the BICC CMN and the call is the BICC-TDM interworking after the route reselection. In this call, the local exchange serving as the BICC CMN configures the failure processing data; if the process of the local exchange selecting the outgoing route fails or the succeeding exchange returns a release message containing a special release cause value before the bearer between the preceding exchange and the succeeding exchange is established; the local exchange performs failure processing, and reselects an outgoing route according to the failure processing data.

In the first example, the local exchange ceases serving as the BICC CMN after reselecting the outgoing route, so it is necessary to perform the bearer connection establishing. Because the call is BICC-TDM interworking after the outgoing route is reselected, the local exchange needs to negotiate the bearer information with the preceding exchange, and use the bearer connection establishing to support the TrFO procedure between the local exchange and the preceding exchange. As shown in Figure 4, the bearer connection establishing includes: the MSC server receives an Initial Address, and forwards the Initial Address. The subsequent procedure is similar to the common call procedure between exchanges with BICC signalings in the prior art.

Figure 5 shows a schematic diagram for reselecting a route in the BICC CMN in accordance with a second example and corresponding to the present invention. Figure 6 shows a flowchart illustrating a method for reselecting a route in the BICC CMN in accordance with the second example and corresponding to the present invention.

In the second example, the local exchange serves as the BICC CMN and triggers the route reselection before the original call bearer is established, and the local exchange ceases serving as the BICC CMN and the call is BICC-BICC interworking after the route reselection. In this call, the local exchange serving as the BICC CMN configures the failure processing data. If the process of the local exchange selecting the outgoing route fails or the succeeding exchange returns a release message containing a special release cause value before the bearer between the preceding exchange and the succeeding exchange is established, the local exchange performs the failure processing, and reselects an outgoing route according to the failure processing data.

In the second example, the local exchange ceases serving as the BICC CMN after reselecting the outgoing route, so it is necessary to perform the bearer connection establishing. If the call is the BICC-BICC interworking after the outgoing route is reselected, the local exchange needs to negotiate the bearer information with the preceding exchange and the succeeding exchange respectively, and use the bearer connection establishing to support the TrFO procedure between the local exchange and the preceding exchange and between the local exchange and the succeeding exchange.

The procedure for the local exchange negotiating the bearer information with the preceding exchange and the succeeding exchange is described in Figure 6 by taking the ISUP as an example. In the procedure as shown in Figure 6, after receiving an Initial Address Message (IAM), an MSC server selects an outgoing route to forward the IAM. When the selection of the outgoing route fails, the MSC server performs the failure processing, i.e., reselects an outgoing route according to the received failure cause value and the predefined failure processing data. The MSC server negotiates the bearer information with the preceding exchange, the Media Gateway (MGW) and the succeeding exchange.

Figure 7 shows a schematic diagram for reselecting a route in the BICC CMN in accordance with a third example. Figure 8 shows a flowchart illustrating a method for reselecting a route in the BICC CMN in accordance with the third example.

In the third example, the local exchange serves as the BICC CMN and triggers the route reselection before the original call bearer is established, and the local exchange still serves as the BICC CMN after the route reselection. In this call, the local exchange serving as the BICC CMN configures the failure processing data. If the process of the local exchange selecting the outgoing route fails or the succeeding exchange returns a release message containing a special release cause value before the bearer between the preceding exchange and the succeeding exchange are established, the local exchange performs the failure processing, reselects an outgoing route according to the failure processing data. The local exchange still serves as the BICC CMN after the outgoing route is reselected.

In the third example, the local exchange serving as the BICC CMN configures data for performing the route reselection according to a designated failure cause value. If the process of the local exchange selecting the outgoing route fails or the local exchange receives the release message of the succeeding exchange containing the designated failure cause value before the bearer of the succeeding exchange is established or before the codec negotiation, the local exchange performs route reselection procedure in the BICC CMN.

The local exchange serves as the BICC CMN and BICC signalings are used in the outgoing route after the outgoing route is reselected. The local exchange needs to forward bearer information in the outgoing Initial Address Message (IAM), the bearer information is sent by the preceding exchange in the original call, and the succeeding call procedure is the same as the common BICC CMN call procedure.

The mechanism for the local exchange serving as the BICC CMN triggering the route reselection after the original call bearer is established is hereinafter described in the following examples. In this call, the local exchange serves as the BICC CMN and configures the failure processing data in advance. If the succeeding exchange returns a release message containing a special release cause value after the call bearer between the preceding exchange and the succeeding exchange is established, the local exchange reselects the outgoing route during failure processing.

In accordance with the present invention, in this call, the local exchange serves as the BICC CMN and configures the failure processing data in advance. If the succeeding exchange returns a release message containing a special release cause value after the call bearer between the preceding exchange and the succeeding exchange is established, the local exchange reselects the outgoing route during failure processing.

Likewise, the local exchange may serve as the BICC CMN or may cease serving as the BICC CMN after the outgoing route is reselected.

If the route reselection in the BICC CMN is triggered after the bearer between the preceding exchange and the succeeding exchange is established, the BICC bearer redirection function (ITU-T Q.1902.6) needs to be used and the preceding exchange needs to support the BC-Anchor node of the bearer redirection.

The BICC bearer redirection may implement the following functions. When the bearer connection of the call is established, if the service layer needs to reconnect the initial call from the exchange where the original called is located to another destination (for example call forward no reply), the established bearer connection may be removed using the bearer redirection function and a direct connection bearer between the calling and the new destination is reestablished.

There are four types of serving nodes in the BICC bearer redirection, including:
a Call Control Anchor (CC-Anchor) node, which is a Serving Node (SN) or a CMN for triggering the BICC bearer redirection function, serving as an anchor node of call control during the BICC bearer redirection, by which all call control signalings are handled;
a Bear Control Anchor (BC-Anchor) node, serving as an anchor node of bearer control during the BICC bearer redirection, in which new and old bearers are terminated;
a Redirecting-from node, serving as an initial terminating node of the call during the BICC bearer redirection; after the bearer redirection is finished, the BC-Anchor node deletes the bearer connection with the Redirecting-from node;
a Redirecting-to node, serving as a terminating node of the call after the BICC bearer redirection is finished; the BC-Anchor node establishes the bearer connection with the Redirecting-to node.

The above four nodes may be configured in different physical node or may be configured in one physical node.

Figure 9 shows a schematic diagram for reselecting a route in the BICC CMN in accordance with a fourth example. Figure 10 shows a flowchart illustrating a method for reselecting a route in the BICC CMN in accordance with the fourth example.

In the fourth example, the local exchange serves as the BICC CMN and triggers the route reselection after the original call bearer is established. The local exchange ceases serving as the BICC CMN and the call is BICC-TDM interworking after the route reselection.

At first, the local exchange serves as the BICC CMN, receives a release message of the succeeding exchange containing a designated failure cause value after the bearer between the preceding exchange and the succeeding exchange is established or after the codec negotiation, and configures data for performing the route reselection according to the designated failure cause value in advance. In this case, the local exchange sends a Release Complete (RLC) Message, and performs the route reselection procedure in the BICC CMN.

If the local exchange ceases serving as the BICC CMN after reselecting the outgoing route, the local exchange needs to actively inform the preceding exchange to perform the bearer redirection procedure.

The bearer redirection procedure is hereinafter described with detailed messages. Those skilled in the art should understand that the following various detailed message are only exemplary, and are not for use in limiting the protection scope of the invention. Practically, the bearer redirection procedure used in the route reselection in the BICC CMN is not limited to the following messages.

If the call is BICC-TDM interworking after the route reselection, the local exchange actively informs the preceding exchange to perform the bearer redirection procedure by sending a Redirect Forwards Request message. The preceding exchange sends a Bearer Redirection Connect Forwards message containing bearer information of a new call to inform this exchange to perform the bearer redirection procedure.

In this case, the local exchange serves as the CC-Anchor node, the Redirecting-from node and the Redirecting-to node of BICC bearer redirection while the preceding exchange serves as the BC-Anchor node.

Afterwards, the local exchange needs to negotiate the bearer information with the preceding exchange using the bearer connection establishing. The preceding exchange informs the local exchange that the bearer has been established via a Redirect Bearer Connected message, the local exchange sends a Redirect Bearer Release Request message to inform the preceding exchange to release the bearer, wherein the bearer is associated with the call before the route reselection. And then, the preceding exchange returns a Redirect Bearer Release Proceed message to inform the local exchange to release the bearer.

Because the local exchange serves as the BICC CMN initially and does not control the bearer, the local exchange directly returns a Redirect Bearer Release Complete message to inform the preceding exchange that the bearer is released completely. After the preceding exchange bearer is released completely, the bearer redirection procedure is over. The local exchange sends an IAM in ISUP message for outgoing, and the subsequent procedure is the same as the common BICC-TDM interworking procedure.

As can be seen from Figure 9, the call is BICC-BICC interworking before being connected to the MSC servert, and is BICC-TDM interworking after the route reselection described hereinabove.

Figure 11 shows a schematic diagram for reselecting a route in the BICC CMN in accordance with a fifth example. Figure 12 shows a flowchart illustrating a method for reselecting a route in the BICC CMN in accordance with the fifth example.

In the fifth example, the local exchange serves as the BICC CMN, and triggers the route reselection after the original call bearer is established. The local exchange ceases serving as the BICC CMN and the call is BICC-BICC interworking after the route reselection.

At first, the local exchange serves as the BICC CMN, receives a release message of the succeeding exchange containing a designated failure cause value after the bearer between the preceding exchange and the succeeding exchange is established or after the codec negotiation, and configures data for performing the failure route reselection according to the designated failure cause value in advance. In this case, the local exchange sends a Release Complete (RLC) Message, and performs route reselection procedure in the BICC CMN.

If the local exchange ceases serving as the BICC CMN after the outgoing route is reselected, the local exchange needs to actively inform the preceding exchange to perform the bearer redirection procedure.

If the call is BICC-BICC interworking after the route reselection, the local exchange actively informs the preceding exchange to perform the bearer redirection procedure by sending a Redirect Forwards Request message. The preceding exchange sends a Bearer Redirection Connect Forwards message containing bearer information of a new call to inform the local exchange to perform the bearer redirection procedure.

In this case, the local exchange serves as the CC-Anchor node and the Redirecting-from node of BICC bearer redirection, the preceding exchange serves as the BC-Anchor node, and the succeeding exchange serves as the Redirecting-to node.

Afterwards, the local exchange needs to negotiate the bearer information with the preceding exchange and the succeeding exchange using the bearer connection establishing. The preceding exchange informs the local exchange that the bearer has been established via a Redirect Bearer Connected message, the local exchange sends a Redirect Bearer Release Request message to inform the preceding exchange to release the bearer, wherein the bearer is associated with the call before the route reselection. And then, the preceding exchange returns a Redirect Bearer Release Proceed message to inform the local exchange to release the bearer.

Because the local exchange serves as the BICC CMN initially and does not control the bearer, the local exchange directly returns a Redirect Bearer Release

Complete message to inform the preceding exchange that the bearer is released completely. After the preceding exchange bearer is released completely, the bearer redirection procedure is over, and the subsequent procedure is the same as the common BICC-TDM interworking procedure.

As can be seen from Figure 11, the call is BICC-BICC interworking before being connected to the MSC server, and is BICC-TDM interworking after the route reselection described hereinabove.

Figure 13 shows a schematic diagram for reselecting a route in the BICC CMN in accordance with a sixth example. Figure 14 shows a flowchart illustrating a method for reselecting a route in the BICC CMN in accordance with the sixth example.

In the sixth example, the local exchange serves as the BICC CMN, and triggers the route reselection after the original call bearer is established. The local exchange still serves as the BICC CMN after the route reselection.

In the case that the local exchange still serves as the BICC CMN after the route reselection, the local exchange receives a release message of the succeeding exchange containing a designated failure cause value after the bearer between the preceding exchange and the succeeding exchange is established or after the codec negotiation, and configured data for performing the failure route reselection according to the designated failure cause value in advance. After receiving a release message, the local exchange sends a Release Complete (RLC) Message, and performs the route reselection procedure in the BICC CMN.

If the local exchange still serves as the BICC CMN after the outgoing route is reselected, the local exchange actively informs the preceding exchange to perform the bearer redirection procedure by sending a Redirect Forwards Request message. The preceding exchange sends a Bearer Redirection Connect Forwards message containing bearer information of a new call to inform the local exchange to perform the bearer redirection procedure.

In this case, the local exchange serves as the CC-Anchor node and the Redirecting-from node of BICC bearer redirection, the preceding exchange serves as the BC-Anchor node, and the succeeding exchange serves as the Redirecting-to node. The preceding exchange negotiates the bearer information with the succeeding exchange using the bearer connection establishing. The preceding exchange informs the local exchange that the bearer has been established via a Redirect Bearer Connected message, the local exchange sends a Redirect Bearer Release Request message to inform the preceding exchange to release the bearer, wherein the bearer is associated with the call before the route reselection. And then, the preceding exchange returns a Redirect Bearer Release Proceed message to inform the local exchange to release the bearer.

Because the local exchange serves as the BICC CMN initially and does not control the bearer, the local exchange directly returns a Redirect Bearer Release Complete message to inform the preceding exchange that the bearer is released completely. After the preceding exchange bearer is released completely, the bearer redirection procedure is over, and the subsequent procedure is the same as the common BICC CMN call procedure.

As can be seen from Figure 13, the MSC server serves as the BICC CMN initially, and still serves as the BICC CMN after the route reselection described hereinabove.

To sum up, if the local exchange serves as the BICC CMN, and the succeeding exchange returns a release message containing a special release cause value before the call set-up procedure is established, BICC signalings are used between exchanges, the local exchange supports to reselect the outgoing route for a designated failure cause value according to the failure processing data configuration.

In the case for triggering the route reselection before the call set-up procedure is established, for a new outgoing call, the local exchange may still serve as the BICC CMN and needs to forward bearer information between exchanges, and the bearer information is sent by the preceding exchange in the original call. If the call is BICC-BICC interworking, the local exchange needs to reestablish the bearer to support the TrFO procedure between the local exchange and the preceding exchange and between the local exchange and the succeeding exchange. If the call is BICC-TDM interworking, the local exchange needs to reestablish the bearer to support the TrFO procedure between the local exchange and the preceding exchange.

In addition, the local exchange may serve as the BICC CMN, the succeeding exchange returns a release message containing a special release cause value after the call set-up procedure is established, and BICC signalings are used between exchanges. The local exchange supports to reselect the outgoing route for a designated failure cause value according to the failure processing data configuration. Meanwhile, the BICC CMN initiates the BICC bearer redirection procedure and triggers the preceding exchange to reestablish the bearer.

In the case for triggering the route reselection after the call set-up procedure is established, for a new outgoing call, the local exchange may still serve as the BICC CMN and needs to forward the bearer information reapplied by the preceding exchange during the bearer redirection. If the call is BICC-BICC interworking, the local exchange needs to reestablish the bearer to support the TrFO procedure between the local exchange and the preceding exchange and between the local exchange and the succeeding exchange. If the call is BICC-TDM interworking, the local exchange needs to reestablish the bearer to support the TrFO procedure between the local exchange and the preceding exchange.

Based on the above analysis, embodiments of the present invention further provide an exchange.

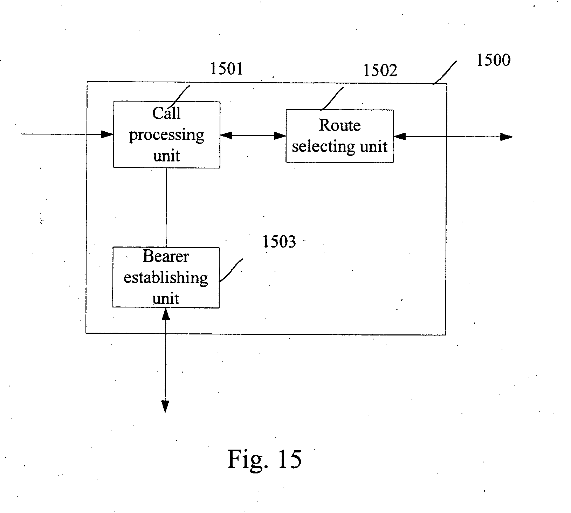

Figure 15 shows a schematic diagram illustrating an exemplary structure of the exchange in accordance with an embodiment of the present invention. The exchange serves as the BICC CMN in this call. As shown in Figure 15, the exchange includes:
call processing unit 1501, used for receiving and forwarding bearer information of the call, and acquiring the outgoing route failure cause value before the bearer of this call is established;
bearer establishing unit 1502, used for negotiating the bearer information with the media gateway and the preceding exchange respectively;
route selecting unit 1503, used for connecting the call egress to the designated route according to the predefined corresponding relation between the outgoing route failure cause value and the designated route.

Route selecting unit 1503 may connect the call egress to a narrowband relay circuit or a BICC relay circuit according to the predefined corresponding relation between the outgoing route failure cause value and the designated route.

If the call egress is reconnected to the narrowband relay circuit (e.g., an ISUP circuit), bearer establishing unit 1502 needs to negotiate the bearer information with the preceding exchange, e.g., via the Continuity Signal (COT) message; in this case, bearer establishing unit 1502 should further interact with the media gateway to establish the bearer, e.g., via an IAM of ISUP. After the route reselection, the call is BICC-ISUP interworking in the local exchange and the local exchange ceases serving as the BICC CMN.

If the call egress is reconnected to the BICC relay circuit and the local exchange ceases serving as the BICC CMN according to the configuration, bearer establishing unit 1502 needs to negotiate the bearer information with the preceding exchange, and should further interact with the media gateway to establish the bearer, e.g., via an IAM of ISUP. After the route reselection, the call is the BICC-ISUP interworking in the local exchange and the local exchange ceases serving as the BICC CMN.

If the call egress is reconnected to the BICC relay circuit and the local exchange serves as the BICC CMN according to the configuration of the outgoing call, the exchange serving as the BICC CMN needs to forward bearer information between exchanges after the route reselection, and the bearer information is sent by the preceding exchange in the original call.

Call processing unit 1501 may receive a release message containing an outgoing route failure cause value from the succeeding exchange before the bearer of this call is established, and acquire the outgoing route failure cause value from the release message. Call processing unit 1501 may acquire an outgoing route failure cause value from the local exchange before the bearer of this call is established.

In Figure 15, it is described that call processing unit 1501 acquires an outgoing route failure cause value before the bearer of this call is established. In fact, call processing unit 1501 may also acquire an outgoing route failure cause value after the bearer of this call is established.

The detailed case for acquiring an outgoing route failure cause value after the bearer of this call is established is hereinafter described.

Similarly, route selecting unit 1503 may connect the call egress to the narrowband relay circuit or the BICC relay circuit according to the predefined corresponding relation between the outgoing route failure cause value and the designated route.

If the call egress is reconnected to the narrowband relay circuit, e.g., an ISUP circuit, bearer establishing unit 1502 needs to perform the bearer redirection with the preceding exchange. In this case, bearer establishing unit 1502 should further interact with the media gateway to establish the bearer, e.g., via an IAM of ISUP. After the route selection, the call is the BICC-ISUP interworking in the local exchange and the local exchange ceases serving as the BICC CMN.

Specifically, the interaction between the local exchange and the preceding exchange and between the local exchange and the media gateway include: the local exchange sends a Redirect Forwards Request for informing the preceding exchange to perform the bearer redirection and release the original call bearer; the preceding exchange returns a Bearer Redirection Connect Forwards message for informing the local exchange to perform the bearer redirection and returns the bearer information of a new call via the Bearer Redirection Connect Forwards message; the local exchange performs the bearer interaction with the media gateway using the bearer information of the new call notified by the preceding exchange, and negotiates the bearer information with the preceding exchange using the BICC signaling; the preceding exchange informs the local exchange that the bearer is established completely via a Redirect Bearer Connected message; the local exchange further informs the preceding exchange to release the bearer via a Redirect Bearer Release Request, wherein the bearer is associated with the call before the route reselection; the preceding exchange informs the local exchange to releases the bearer via a Redirect Bearer Release Proceed message, wherein the bearer is associated with the call before the route reselection; the local exchange informs the preceding exchange that the original bearer has been released completely via a Redirect Bearer Release Complete message. In this case, the route is reconnected to the narrowband relay circuit, e.g., an ISUP circuit, it is necessary for sending an IAM of ISUP to establish a call.

If the call egress is reconnected to the BICC relay circuit, the local exchange ceases serving as the BICC CMN according to the configuration. In this case, bearer establishing unit 1502 needs to negotiate the bearer information with the preceding exchange, and further should interact with the media gateway to establish the bearer, e.g., via an IAM of ISUP. After the route reselection, the call is BICC-ISUP interworking in the local exchange and the local exchange ceases serving as the BICC CMN.

Specifically, the interaction between the local exchange and the media gateway includes: the local exchange sends a Redirect Forwards Request for informing the preceding exchange to perform the BICC bearer redirection and release the original call bearer; the preceding exchange returns a Bearer Redirection Connect Forwards message for informing the local exchange to perform the bearer redirection and returns the bearer information of a new call via the Bearer Redirection Connect Forwards message; the local exchange performs the bearer interaction with the media gateway using the bearer information of the new call notified by the preceding exchange, and negotiates the bearer information with the preceding exchange using the BICC signaling; the local exchange selects the BICC relay circuit as the outgoing route, and negotiates the bearer information with the preceding exchange and the succeeding exchange using the BICC signaling; the preceding exchange informs the local exchange that the bearer is established completely via a Redirect Bearer Connected message; the local exchange further informs the preceding exchange to release the call bearer before the route reselection via a Redirect Bearer Release Request; the preceding exchange informs the local exchange to release the call bearer before the route reselection via a Redirect Bearer Release Proceed message; the local exchange informs the preceding exchange that the original bearer has been released completely via a Redirect Bearer Release Complete message. In this case, the outgoing route is reconnected to the BICC relay circuit, and it is necessary for sending an IAM of ISUP to establish a call.

If the call egress is reconnected to the BICC relay circuit and the local exchange serves as the BICC CMN according to the configuration of the outgoing call, the local exchange serving as the BICC CMN needs to inform the preceding exchange to perform the bearer redirection procedure, and forward bearer information after the route reselection, and the bearer information is sent by the preceding exchange in the original call.

Specifically, the local exchange sends a Redirect Forwards Request to inform the preceding exchange to perform the BICC bearer redirection and release the original call bearer; the preceding exchange returns a Bearer Redirection Connect Forwards message to inform the local exchange to perform the bearer redirection and returns the bearer information of a new call via the Bearer Redirection Connect Forwards message; the local exchange selects the BICC relay circuit as the outgoing route, and still serves as the BICC CMN in the new outgoing call; the local exchange directly forwards the bearer information of the new call notified by the preceding exchange to the succeeding exchange; the preceding exchange informs the local exchange that the bearer is established completely via a Redirect Bearer Connected message; the local exchange further informs the preceding exchange to release the call bearer before the route reselection via a Redirect Bearer Release Request; the preceding exchange informs the local exchange to release the call bearer before the route reselection via a Redirect Bearer Release Proceed message; the local exchange informs the preceding exchange that the original bearer has been released completely via a Redirect Bearer Release Complete message.

The foregoing description is only preferred embodiments of the present invention and is not for use in limiting the protection scope thereof. Any modification, equivalent replacement and improvement falling within the scope of the claims should be included in the protection scope thereof.

## Claims

1. A method for reselecting a route by an exchange (202, 1500) which serves as a Bearer Independent Call Control Protocol, BICC, Call Mediation Node, CMN, in a call, comprising:
configuring (101) a corresponding relation between an outgoing route failure cause value and a designated route on an exchange;
acquiring (102), by a call processing unit (1501) of said exchange, an outgoing route failure cause value when an outgoing route fails; and
selecting (103) by a route selecting unit (1502) of said exchange, a designated route according to the corresponding relation between the outgoing route failure cause value and the designated route and setting up a call; **characterized in that**:
when the outgoing route fails before a bearer between a preceding exchange and a succeeding exchange is established, the exchange ceases serving as a BICC CMN after selecting the designated route; controls a media gateway according to said relation and negotiates the bearer information with the preceding exchange, the media gateway and the succeeding exchange respectively to set up a BICC-BICC interworking call.

2. The method of Claim 1, wherein acquiring the outgoing route failure cause value comprises:
acquiring the outgoing route failure cause value when the outgoing route of the exchange serving as the BICC CMN fails; or
receiving a release message containing the outgoing route failure cause value from a succeeding exchange when the process of the succeeding exchange selecting the outgoing route fails; and acquiring the outgoing route failure cause value from the release message.

3. A system for reselecting a route when an outgoing route fails before a bearer between a preceding exchange and a succeeding exchange is established, comprising:
an exchange (202), which is adapted to serve as a BICC CMN in a call, comprising
means adapted to be configured by a corresponding relation between an outgoing route failure cause value and a designated route;
a call processing unit (1501), adapted to acquire an outgoing route failure cause value when an outgoing route fails;
a route selecting unit (1502), adapted to select a designated route according to a predefined corresponding relation between the outgoing route failure cause value and the designated route and adapted to set up the call;
**characterized in that**:
the exchange is adapted to cease serving as a BICCCMN after selecting the designated route;
to control a media gateway (203) according to said relation and to negotiate the bearer information with the preceding exchange, the media gateway and the succeeding exchange respectively to set up a BICC-BICC interworking call.

4. The system of Claim 3, wherein the exchange serving as the BICC CMN comprises:
a first unit (201), adapted to acquire the outgoing route failure cause value when the outgoing route of the exchange serving as the BICC CMN fails; or
a second unit (202), adapted to receive a release message containing the outgoing route failure cause value from a succeeding exchange when the process of the succeeding exchange selecting the outgoing route fails, and acquiring the outgoing route failure cause value from the release message.

5. An exchange (1500) which is adapted to serve as a BICC CMN in a call for reselecting a route when the outgoing route fails before a bearer between a preceding exchange and a succeeding exchange is established, wherein the exchange comprises:
means adapted to be configured by a corresponding relation between an outgoing route failure cause value and a designated route; a call processing unit (1501), adapted to acquire an outgoing route failure cause value when an outgoing route fails;
a route selecting unit (1502), adapted to select a designated route according to a predefined corresponding relation between the outgoing route failure cause value and the designated route and adapted to set up the call; **characterized in that**:
the exchange is adapted to cease serving as the BICC CMN after selecting the designated route; to control a media gateway according to said relation and to negotiate the bearer information with the preceding exchange, the media gateway and the succeeding exchange respectively to set up a BICC-BICC interworking call.

6. The exchange of Claim 5, wherein the call processing unit (1501) comprises:
a first unit, adapted to acquire the outgoing route failure cause value from the exchange serving as the BICC CMN directly when the outing route of the exchange serving as the BICC CMN fails;
a second unit, adapted to receive a release message carrying the outgoing route failure cause value from a succeeding exchange when the process of the succeeding exchange selecting the outgoing route fails, and acquire the outgoing route failure cause value from the release message.

## Patentansprüche

1. Verfahren zur Neuauswahl eines Leitwegs durch eine Vermittlungsstelle (202, 1500), die als ein "Bearer Independent Call Control Protocol", BICC, "Call Mediation Node", CMN, BICC-CMN, bei einer Verbindung dient, das die folgenden Schritte aufweist:
Konfigurieren (101) einer entsprechenden Beziehung zwischen einem Wert eines Fehlergrunds eines abgehenden Leitwegs und einem vorgesehenen Leitweg an einer Vermittlungsstelle;
Erfassen (102) durch eine Verbindungsverarbeitungseinheit (1501) der Vermittlungsstelle eines Werts eines Fehlergrunds eines abgehenden Leitwegs, wenn ein abgehender Leitweg versagt; und
Auswählen (103) durch eine Leitwegauswahleinheit (1502) der Vermittlungsstelle eines vorgesehenen Leitwegs gemäß der entsprechenden Beziehung zwischen dem Wert eines Fehlergrunds eines abgehenden Leitwegs und dem vorgesehenen Leitweg und Aufbauen einer Verbindung; **dadurch gekennzeichnet, dass**:
wenn der abgehende Leitweg versagt, bevor ein Nutzdatenstrom zwischen einer vorhergehenden Vermittlungsstelle und einer nachfolgenden Vermittlungsstelle hergestellt wird, die Vermittlungsstelle nach dem Auswählen des vorgesehenen Leitwegs aufhört, als ein BICC-CMN zu dienen, ein Medien-Gateway gemäß der Beziehung steuert und die Nutzdatenstrominformationen mit der vorhergehenden Vermittlungsstelle, dem Medien-Gateway bzw. der nachfolgenden Vermittlungsstelle aushandelt,
um eine BICC-BICC-Verknüpfungsverbindung aufzubauen.

2. Verfahren nach Anspruch 1, wobei das Erfassen des Werts eines Fehlergrunds eines abgehenden Leitwegs Folgendes aufweist:
Erfassen des Werts eines Fehlergrunds eines abgehenden Leitwegs, wenn der abgehende Leitweg der Vermittlungsstelle, die als der BICC-CMN dient, versagt; oder
Empfangen einer Freigabemeldung, die den Wert eines Fehlergrunds eines abgehenden Leitwegs enthält, von einer nachfolgenden Vermittlungsstelle, wenn der Prozess des Auswählen des abgehenden Leitwegs durch die nachfolgende Vermittlungsstelle versagt; und Erfassen des Werts eines Fehlergrunds eines abgehenden Leitwegs aus der Freigabemeldung.

3. System zur Neuauswahl eines Leitwegs, wenn ein abgehender Leitweg versagt, bevor ein Nutzdatenstrom zwischen einer vorhergehenden Vermittlungsstelle und einer nachfolgenden Vermittlungsstelle hergestellt wird, das Folgendes aufweist:
eine Vermittlungsstelle (202), die eingerichtet ist, bei einer Verbindung als ein BICC-CMN zu dienen, die Folgendes aufweist:
Mittel, die eingerichtet sind, durch eine entsprechende Beziehung zwischen einem Wert eines Fehlergrunds eines abgehenden Leitwegs und einem vorgesehenen Leitweg konfiguriert zu werden;
eine Verbindungsverarbeitungseinheit (1501), die eingerichtet ist, einen Wert eines Fehlergrunds eines abgehenden Leitwegs zu erfassen, wenn ein abgehender Leitweg versagt;
eine Leitwegauswahleinheit (1502), die eingerichtet ist, einen vorgesehenen Leitweg gemäß einer vordefinierten entsprechenden Beziehung zwischen dem Wert eines Fehlergrunds eines abgehenden Leitwegs und dem vorgesehenen Leitweg auszuwählen, und eingerichtet ist, die Verbindung aufzubauen;
**dadurch gekennzeichnet, dass**:
die Vermittlungsstelle eingerichtet ist, nach dem Auswählen des vorgesehenen Leitwegs aufzuhören, als ein BICC-CMN zu dienen; ein Medien-Gateway (203) gemäß der Beziehung zu steuern und die Nutzdatenstrominformationen mit der vorhergehenden Vermittlungsstelle, dem Medien-Gateway bzw. der nachfolgenden Vermittlungsstelle auszuhandeln, um eine BICC-BICC-Verknüpfungsverbindung aufzubauen.

4. System nach Anspruch 3, wobei die Vermittlungsstelle, die als der BICC-CMN dient, Folgendes aufweist:
eine erste Einheit (201), die eingerichtet ist, den Wert eines Fehlergrunds eines abgehenden Leitwegs zu erfassen, wenn der abgehende Leitweg der Vermittlungsstelle,
die als der BICC-CMN dient, versagt; oder
eine zweite Einheit (202), die eingerichtet ist, eine Freigabemeldung, die den Wert eines Fehlergrunds eines abgehenden Leitwegs enthält, von einer nachfolgenden Vermittlungsstelle zu empfangen, wenn der Prozess des Auswählens des abgehenden Leitwegs durch die nachfolgende Vermittlungsstelle versagt, und den Wert eines Fehlergrunds eines abgehenden Leitwegs aus der Freigabemeldung zu erfassen.

5. Vermittlungsstelle (1500), die eingerichtet ist, in einer Verbindung zur Neuauswahl eines Leitwegs als ein BICC-CMN zu dienen, wenn der abgehende Leitweg versagt, bevor ein Nutzdatenstrom zwischen einer vorhergehenden Vermittlungsstelle und einer nachfolgenden Vermittlungsstelle hergestellt wird, wobei die Vermittlungsstelle Folgendes aufweist:
Mittel, die eingerichtet sind, durch eine entsprechende Beziehung zwischen einem Wert eines Fehlergrunds eines abgehenden Leitwegs und einem vorgesehenen Leitweg konfiguriert zu werden;
eine Verbindungsverarbeitungseinheit (1501), die eingerichtet ist, einen Wert eines Fehlergrunds eines abgehenden Leitwegs zu erfassen, wenn ein abgehender Leitweg versagt;
eine Leitwegauswahleinheit (1502), die eingerichtet ist, einen vorgesehenen Leitweg gemäß einer vordefinierten entsprechenden Beziehung zwischen dem Wert eines Fehlergrunds eines abgehenden Leitwegs und dem vorgesehenen Leitweg auszuwählen, und eingerichtet ist, die Verbindung aufzubauen; **dadurch gekennzeichnet, dass**:
die Vermittlungsstelle eingerichtet ist, nach dem Auswählen des vorgesehenen Leitwegs aufzuhören, als der BICC-CMN zu dienen; ein Medien-Gateway gemäß der Beziehung zu steuern und die Nutzdatenstrominformationen mit der vorhergehenden Vermittlungsstelle, dem Medien-Gateway bzw. der nachfolgenden Vermittlungsstelle auszuhandeln, um eine BICC-BICC-Verknüpfungsverbindung aufzubauen.

6. Vermittlungsstelle nach Anspruch 5, wobei die Verbindungsverarbeitungseinheit (1501) Folgendes aufweist:
eine erste Einheit, die eingerichtet ist, den Wert eines Fehlergrunds eines abgehenden Leitwegs direkt von der Vermittlungsstelle zu erfassen, die als der BICC-CMN dient,
wenn der abgehende Leitweg der Vermittlungsstelle, die als der BICC-CMN dient,
versagt;
eine zweite Einheit, die eingerichtet ist, eine Freigabemeldung, die den Wert eines Fehlergrunds eines abgehenden Leitwegs befördert, von einer nachfolgenden Vermittlungsstelle zu empfangen, wenn der Prozess des Auswählens des abgehenden Leitwegs durch die nachfolgende Vermittlungsstelle versagt, und den Wert eines Fehlergrunds eines abgehenden Leitwegs aus der Freigabemeldung zu erfassen.

## Revendications

1. Procédé pour resélectionner une route par un central (202, 1500) servant de Noeud de Médiation d'Appel, CMN, sous Protocole de Commande d'Appel Indépendant du Support, BICC, dans un appel, le procédé comprenant les étapes consistant à :
configurer (101) une relation de correspondance entre une valeur de cause d'échec de route sortante et une route désignée sur un central ;
obtenir (102), par une unité de traitement d'appel (1501) dudit central, une valeur de cause d'échec de route sortante en cas d'échec d'une route sortante ; et
sélectionner (103), par une unité de sélection de route (1502) dudit central, une route désignée conformément à la relation de correspondance entre la valeur de cause d'échec de route sortante et la route désignée et établir un appel ;
le procédé étant **caractérisé en ce que** :
en cas d'échec de la route sortante avant l'établissement d'un support entre un central précédent et un central suivant, le central cesse de servir de CMN sous BICC suite à la sélection de la route désignée ; commande une passerelle de média conformément à ladite relation et négocie les informations de support respectivement avec le central précédent, la passerelle de média et le central suivant pour établir un appel d'interfonctionnement BICC-BICC.

2. Procédé selon la revendication 1, dans lequel l'étape consistant à obtenir la valeur de cause d'échec de route sortante comprend l'étape consistant à :
obtenir la valeur de cause d'échec de route sortante en cas d'échec de la route sortante du central servant de CMN sous BICC ; ou
recevoir un message de libération contenant la valeur de cause d'échec de route sortante en provenance d'un central suivant en cas d'échec du processus de sélection de la route sortante par le central suivant ; et obtenir la valeur de cause d'échec de route sortante à partir du message de libération.

3. Système pour resélectionner une route en cas d'échec d'une route sortante avant l'établissement d'un support entre un central précédent et un central suivant, le système comprenant :
un central (202), adapté à servir de CMN sous BICC dans un appel, comprenant :
un moyen adapté à être configuré par une relation de correspondance entre une valeur de cause d'échec de route sortante et une route désignée ;
une unité de traitement d'appel (1501), adaptée à obtenir une valeur de cause d'échec de route sortante en cas d'échec d'une route sortante ;
une unité de sélection de route (1502), adaptée à sélectionner une route désignée conformément à une relation de correspondance prédéfinie entre la valeur de cause d'échec de route sortante et la route désignée et adaptée à établir l'appel ;
le système étant **caractérisé en ce que** :
le central est adapté à cesser de servir de CMN sous BICC suite à la sélection de la route désignée ; à commander une passerelle de média (203) conformément à ladite relation et à négocier les informations de support respectivement avec le central précédent, la passerelle de média et le central suivant pour établir un appel d'interfonctionnement BICC-BICC.

4. Système selon la revendication 3, dans lequel le central servant de CMN sous BICC comprend :
une première unité (201), adaptée à obtenir la valeur de cause d'échec de route sortante en cas d'échec de la route sortante du central servant de CMN sous BICC ;
ou
une deuxième unité (202), adaptée à recevoir un message de libération contenant la valeur de cause d'échec de route sortante en provenance d'un central suivant en cas d'échec du processus de sélection de la route sortante par le central suivant, et à obtenir la valeur de cause d'échec de route sortante à partir du message de libération.

5. Central (1500), adapté à servir de CMN sous BICC dans un appel pour resélectionner une route en cas d'échec de la route sortante avant l'établissement d'un support entre un central précédent et un central suivant, lequel central comprend :
un moyen adapté à être configuré par une relation de correspondance entre une valeur de cause d'échec de route sortante et une route désignée ;
une unité de traitement d'appel (1501), adaptée à obtenir une valeur de cause d'échec de route sortante en cas d'échec d'une route sortante ;
une unité de sélection de route (1502), adaptée à sélectionner une route désignée conformément à une relation de correspondance prédéfinie entre la valeur de cause d'échec de route sortante et la route désignée et adaptée à établir l'appel ;
le central étant **caractérisé en ce que** :
il est adapté à cesser de servir de CMN sous BICC suite à la sélection de la route désignée ; à commander une passerelle de média conformément à ladite relation et à négocier les informations de support respectivement avec le central précédent, la passerelle de média et le central suivant pour établir un appel d'interfonctionnement BICC-BICC.

6. Central selon la revendication 5, dans lequel l'unité de traitement d'appel (1501) comprend :
une première unité, adaptée à obtenir la valeur de cause d'échec de route sortante directement auprès du central servant de CMN sous BICC en cas d'échec de la route sortante du central servant de CMN sous BICC ;
une deuxième unité, adaptée à recevoir un message de libération contenant la valeur de cause d'échec de route sortante en provenance d'un central suivant en cas d'échec du processus de sélection de la route sortante par le central suivant, et à obtenir la valeur de cause d'échec de route sortante à partir du message de libération.
